# EUROPÄISCHE PATENTSCHRIFT

(11) **EP 2 510 030 B1**
(45) Veröffentlichungstag und Bekanntmachung des Hinweises auf die Patenterteilung: **28.08.2013**
(21) Anmeldenummer: 10785444.0
(22) Anmeldetag: 06.12.2010
(51) Int. Cl.: C08G 18/12, C08G 18/48, C08G 18/66, C08G 18/73, C09D 175/08, C09J 175/04, C09J 175/08

(54) **POLYURETHAN-PREPOLYMERE**
POLYURETHANE PREPOLYMERS
PRÉPOLYMÈRES POLYURETHANE

(30) Priorität: 09.12.2009 DE 102009057598
(43) Veröffentlichungstag der Anmeldung: 17.10.2012
(73) Patentinhaber: Bayer Intellectual Property GmbH, 40789 Monheim (DE)
(72) Erfinder: PEIFFER, Evelyn, 51375 Leverkusen (DE); MATNER, Mathias, 41464 Neuss (DE)
(74) Vertreter: BIP Patents
(86) Internationale Anmeldenummer: PCT/EP2010/068981
(87) Internationale Veröffentlichungsnummer: WO 2011/069971

(56) Entgegenhaltungen:
- EP-A2- 0 070 475
- DE-A1- 10 140 132
- DE-A1- 10 328 844
- DE-A1-102007 058 344
- CHEMICAL ABSTRACTS, Bd. 113, Nr. 6, 6. August 1990 (1990-08-06), Columbus, Ohio, US; abstract no.: 42186x, Akazawa, Toshiyuki: "Boiling water-resistant silicon-containing polyurethane adhesives", Seite 66, Spalte 1 XP000182291 & JP 2 032186 A (KURARAY CO) 1. Februar 1990 (1990-02-01)

## Beschreibung

Die vorliegende Erfindung betrifft Polyurethan-Prepolymere, ein Verfahren zu ihrer Herstellung und ihre Anwendung als Bindemittel für Klebstoffe, Beschichtungen, oder Schäume.

Alkoxysilanfunktionelle Polyurethane, die über eine Silanpolykondensation vernetzen, sind seit langem bekannt. Ein Übersichtsartikel zu dieser Thematik findet sich z.B. in "Adhesives Age" 4/1995, Seite 30 ff. (Autoren: Ta-Min Feng, B. A. Waldmann). Derartige alkoxysilanterminierte, feuchtigkeitshärtende Einkomponenten-Polyurethane werden in zunehmendem Maße als weichelastische Beschichtungs-, Dichtungs- und Klebmassen im Bauwesen und in der Automobilindustrie verwendet.

Solche alkoxysilanfunktionellen Polyurethane können gemäß US-A 3,627,722 oder DE-A 1 745 526 hergestellt werden, indem z.B. Polyetherpolyole mit einem Überschuss Polyisocyanat zu einem NCO-haltigen Prepolymer umgesetzt werden, das dann wiederum mit einem aminofunktionellen Alkoxysilan weiter umgesetzt wird.

Die Veröffentlichungen EP-A 0 397 036, DE-A 19 908 562 (entspr. EP-A 1 093 482) und US-A 2002/0100550 beschreiben weitere unterschiedliche Wege zur Herstellung von alkoxysilanterminierten Polymeren. Gemäß dieser Schriften werden jeweils hochmolekulare Polyether mit einem durchschnittlichen Molekulargewicht von 4000g/mol oder größer eingesetzt.

Die Anmeldung EP-A 0 070 475 beschreibt die Herstellung und Verwendung von alkoxysilanterminierten Polymeren ausgehend von Wasserstoff aciden Prepolymeren durch Terminierung mit NCO-funktionellen Alkoxysilanen. Zur Prepolymersynthese werden Polyole mit einem Molgewicht von 500 - 6000 g/mol verwendet. Die darin beschriebenen Polymere werden als Bindemittel in Dichtstoffformulierungen, also weichelastischen Systemen, eingesetzt.

Ein analoges Verfahren wird in der Anmeldung DE-A 10 2007 058 344 beschrieben.

All diese alkoxysilanterminierten Systeme bilden nach der Aushärtung weichelastische Polymere mit einer relativ geringen Festigkeit und einer hohen Bruchdehnung. Die DE-A 1 745 526 beschreibt für Polyoxypropylenglykol-basierte Polymere Zugfestigkeiten im Bereich von 3,36 kg/cm² bis 28,7 kg/cm². Nur mit kristallisierenden Polycaprolactonen werden hohe Festigkeiten erreicht, die für strukturelle Klebungen ausreichend sind.

Diese Systeme sind aber bei Raumtemperatur sehr hochviskos oder fest und können daher nur warm verarbeitet werden.

Dementsprechend ist der Anwendungbereich der oben genannten Anmeldungen einerseits auf Dichtstoffe und weichelastische Klebstoffe, andererseits auf hochviskose oder feste Systeme, die nur warm verarbeitet werden können, beschränkt. Der vorliegenden Erfindung lag daher die Aufgabe zugrunde, bei Raumtemperatur flüssige, al-koxysilanterminierte Polyurethane zur Verfügung zu stellen, die ausgehärtet eine hohe Kohäsionsfestigkeit erreichen, so dass mit ihnen Klebstoffe formuliert werden können, die strukturelles Kleben ermöglichen.

Es wurde nun gefunden, dass sich derartige alkoxysilanterminierte Polyurethane herstellen lassen, indem aus einem Polyisocyanat und einer Mischung von Verbindungen mit gegenüber Isocyanaten reaktiven Gruppen zunächst ein Prepolymer hergestellt wird, welches isocyanatreaktiven Wasserstoff enthält. Dabei liegen in der Mischung von Verbindungen mit gegenüber Isocyanaten reaktiven Gruppen niedermolekulare, multifunktionelle isocyanatreaktive Verbindungen mit einem Molekulargewicht ≤ 500 g/mol zu 1 bis 40 Gew. % vor. Das erhaltene, isocyanatreaktiven Wasserstoff aufweisende Prepolymer wird abschließend mit einem isocyanatfunktionellen Alkoxysilan modifiziert.

Gegenstand der Erfindung sind daher mit Alkoxysilangruppen modifizierte Polymere, die durch Umsetzung
a) eines isocyanatreaktiven Wasserstoff enthaltenden Prepolymers, welches Struktureinheiten der allgemeinen Formel (I) enthält, 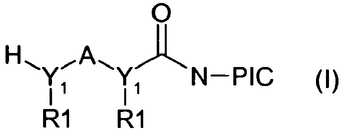 worin
   - PIC: für einen um die Isocyanatgruppen reduzierten Rest eines Polyisocyanates (B) steht,
   - Y¹: für Stickstoff, Sauerstoff oder Schwefel steht,
   - R¹: entweder für ein freies Elektronenpaar oder Wasserstoff oder für einen beliebigen organischen Rest steht,
   - A: ein um die isocyanatreaktiven Gruppen reduzierter Rest eines Isocyanatreaktiven Polymers und niedermolekularer, multifunktioneller isocyanatreaktiver Verbindungen, das aus in beliebiger Reihenfolge, also blockweise, alternierend oder statistisch, über das aus den Polyisocyanaten B stammende Strukturelement der Formel

   -Y²-(C=O)-NH-PIC-NH-(C=O)-Y¹(R¹)-

   worin Y¹ und Y² unabhängig voneinander für Stickstoff, Sauerstoff oder Schwefel stehen, miteinander verknüpften niedermolekularen, multifunktionellen isocyanatreaktiven Verbindungen (A1) und Polyetherpolyolen (A2) aufgebaut ist, wobei es sich bei den terminalen Gruppen dieser Substrukturen, ganz oder teilweise, auch um die entsprechenden Thioverbindungen oder Aminderivate handeln kann, wobei es sich
   zu 1 bis 40 Gew.-% um Substrukturen A1 eines mittleren Molekulargewichts (Mn) kleiner 500 g/mol und
   zu 60 bis 99 Gew.-% um Substrukturen A2 eines mittleren Molekulargewichts (Mn) von mehr als 500 g/mol handelt,
   und wobei A insgesamt eine mittlere Funktionalität von 2-6 aufweist,
   mit
b) einer isocyanatfunktionellen Alkoxysilanverbindung (Komponente C) der allgemeinen Formel (II): 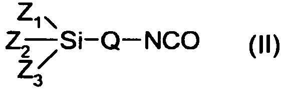 worin
   - Z¹, Z² und Z³: gleiche oder verschiedene C₁-C₈-Alkoxy- oder C₁-C₈-Alkylreste sind, die auch verbrückt sein können, wobei aber an jedem Si-Atom mindestens ein C₁-C₈-Alkoxyrest vorhanden sein muss,
   - Q: ein difunktioneller linearer oder verzweigter organischer Rest ist, bevorzugt ein Alkylenradikal mit 1 bis 8 Kohlenstoffatomen,
   erhältlich sind.

Dabei kann die Umsetzung von b) mit a) in einem Verhältnis von 0,8 : 1,0 bis zu 1,5 : 1,0 (NCO : Y-H) erfolgen.

Die erfindungsgemäßen Verbindungen sind nicht kristallisierende, bei Raumtemperatur flüssige stoffe mit einem zahlenmittleren Molekulargewicht von kleiner 5000 g/mol, bevorzugt kleiner 4000 g/mol und einer Viskosität kleiner 700 Pas bei 23 °C, bevorzugt kleiner 500 Pas bei 23 °C.

Die Mischung isocyanatreaktiver Verbindungen (Komponente A) besteht zu 1 - 40 % aus einer niedermolekularen, multifunktionellen isocyanatreaktiven Verbindung (A1) mit 2-6 isocyanatreaktiven Gruppen und einem zahlenmittleren Molekulargewicht von kleiner 500 g/mol und zu 60 - 99 % aus einer isocyanatreaktiven Verbindung (A2) mit 2-6 isocyanatreaktiven Gruppen und einem zahlenmittleren Molekulargewicht von über 500 g/mol, wobei sowohl A1 als auch A2 jeweils aus Kombinationen von Verbindungen mit isocyanatreaktiven Gruppen bestehen kann, solange diese Verbindungen in die oben beschriebenen Grenzen bezüglich des Molekulargewichtes fallen.

Als Komponente A können alle dem Fachmann bekannten Verbindungen mit isocyanatreaktiven Gruppen eingesetzt werden, welche eine Funktionalität von im Mittel mindestens 2 aufweisen. Dies können für A1 beispielsweise niedermolekulare, multifunktionelle isocyanatreaktive Verbindungen wie aliphatische Polyole oder Polyamine, aromatische Polyole oder Polyamine sein und für A2 beispielsweise höhermolekulare isocyanatreaktive Verbindungen wie Polyetherpolyole, sowie Polythioetherpolyole sein. Bevorzugt weisen solche isocyanatreaktiven Verbindungen eine mittlere Funktionalität von 2 bis 6, bevorzugt 2 bis 3,5 und besonders bevorzugt von 2 bis 3 auf.

Bevorzugt in Komponente A1 verwendet werden mehrwertige, vorzugsweise zweiwertige oder dreiwertige Alkoholen wie beispielsweise Ethylenglykol, Diethylenglykol, Triethylenglykol, Tetraethylenglykol, 1,2-Propandiol, 1,3-/1,4-Butandiol, 1,3-/1,6-Hexandiol, 1,8-Octandiol, Neopentylglykol, 1,4-Bis(hydroxymethyl)cyclohexan, Bis(hydroxymethyl)tricyclo[5.2.1.02.6]decan oder 1,4-Bis(2-hydroxyethoxy)benzol, 2-Methyl-1,3-propandiol, 2,2,4-Trimethylpentan-1,3-diol, 2-Ethyl-1,3-hexandiol, Dipropylenglykol, Polypropylenglykole, Dibutylenglykol, Polybutylenglykole, 1,4-Phenoldimethanol, Bisphenol A, Tetrabrombisphenol A, Glycerin, Trimethylolpropan, 1,2,6-Hexantriol, 1,2,4-Butantriol, Pentaerythrit, Chinit, Mannit, Sorbit, Methylglykosid und 4,3,6-Dianhydrohexite.

Geeignete Di- oder Triamine können sein aliphatische Amine z.B. Ethylendiamin, 1,2-Propylendiamin, 1,3-Propylendiamin, 1,4-Butandiamin, Neopentandiamin, 1,5-Diamino-2-methylpentan (Dytek^{®} A, DuPont), 2-Butyl-2-ethyl-1,5-pentandiamin, 1,6-Hexamethylendiamin, 2,5-Diamino-2,5-dimethylhexan, 2,2,4- und/oder 2,4,4-Trimethyl-1,6-diaminohexan, 1,8-Diaminooctan, 1,11-Diaminoundecan, 1,12-Diaminododecan, 4-Aminomethyl-1,8-octandiamin (Triaminononan), Diethylentriamin, Triethylentetramin, cycloaliphatische Amine wie z.B. 1-Amino-3,3,5-trimethyl-5-aminomethyl-cyclohexan (Isophorondiamin, IPDA), TCD-Diamin, 1,4-Cyclohexandiamin, 2,4- und/oder 2,6-Hexahydrotoluylendiamin (H₆TDA), Isopropyl-2,4-diaminocyclohexan und/oder Isopropyl-2,6-diaminocyclohexan, Tricyclodecanbis(methylamin), 1,3-Bis-(aminomethyl)-cyclohexan, 2,4'- und/oder 4,4'-Diaminodicyclohexylmethan (PACM 20), 3,3'-Dimethyl-4,4'-diamino-dicyclohexylmethan (Laromin^{®} C 260, BASF AG, DE), die Isomeren, eine Methylgruppe als Kernsubstituenten aufweisenden Diaminodicyclohexylmethane (wie z.B. C-Monomethyl-diaminodicyclohexylmethane), 3(4)-Aminomethyl-1-methylcyclo-hexylamin (AMCA) sowie araliphatische Di- oder Triamine, wie z.B. 1,3-Diaminobenzol, 1,4-Diaminobenzol, 2,4-und/oder 2,6-Diaminotoluol (TDA), 1,3-Bis-(aminomethyl)-benzol, 3,5-Diethyltoluol-2,4-diamin, m-Xylylendiamin. 4,6-Dimethyl-1,3-benzoldimethanamin, 4,4'-und/oder 2,4'- und/oder 2,2'-Methylenbisbenzolamin (MDA), oder Heteroatome enthaltende Amine, Dimerfettsäurediamin, Bis-(3-aminopropyl)-methylamin, 4,9-Dioxadodecan-1,12-diamin oder 4,7,10-Trioxatridecan-1,13-diamin.

Als Komponente A2 werden Polyetherpolyole verwendet. Diese sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Geeignete Starter-Moleküle für die Herstellung von Polyetherpolyolen sind Moleküle mit mindestens 2 gegenüber Epoxiden reaktiven Element-Wasserstoffbindungen oder beliebige Gemische derartiger Starter-Moleküle.

Besonders geeignete Polyetherpolyole sind solche der vorstehend genannten Art mit einem Gehalt an ungesättigten Endgruppen von kleiner oder gleich 0,02 Milliäquivalenten pro Gramm Polyol (meq/g), bevorzugt kleiner oder gleich 0,015 meq/g, besonders bevorzugt kleiner oder gleich 0,01 meq/g (Bestimmungsmethode ASTM D2849-69).

Dies ist z.B. in der US-A 5 158 922 (z.B. Beispiel 30) und EP-A 0 654 302 (S. 5, Z. 26 bis S. 6, Z. 32) beschrieben.

Geeignete Starter-Moleküle für die Herstellung von Polyetherpolyolen sind beispielsweise einfache, niedermolekulare Polyole, Wasser, Ethylenglykol, Propandiol-1,2, 2,2-Bis(4-hydroxy-phenyl)propan, Propylenglykol-1,3- und Butandiol-1,4, Hexandiol-1,6, Neopentylglykol, 2-Ethylhexandiol-1,3, Trimethylolpropan, Glyzerin, Pentaerythrit, Sorbit, organische Polyamine mit mindestens zwei N-H-Bindungen wie z.B. Triethanolamin, Ammoniak, Methylamin oder Ethylendiamin oder beliebige Gemische derartiger Starter-Moleküle. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Es können auch Polyetherpolyolmischungen eingesetzt werden, die wenigstens ein Polyol mit wenigstens einer tertiären Aminogruppe enthalten. Solche tertiäre Aminogruppen aufweisenden Polyetherpolyole lassen sich durch Alkoxylierung von Startermolekülen oder Mischungen von Startermolekülen, wenigstens enthaltend ein Startermolekül mit mindestens 2 gegenüber Epoxiden reaktiven Element-Wasserstoffbindungen, von denen mindestens eine eine NH-Bindung ist, oder niedermolekulare Polyolverbindungen die tertiäre Aminogruppen tragen, herstellen. Beispiele für geeignete Startermoleküle sind Ammoniak, Methylamin, Ethylamin, n-Propylamin, iso-Propylamin, Ethanolamin, Diethanolamin, Triethanolamin, Ethylendiamin, Ethylentriamin, Triethanolamin, N-Methyl-diethanolamin, Ethylendiamin, N,N'-Dimethyl-ethylendiamin, Tetramethylendiamin, Hexamethylendiamin, 2,4-Toluylendiamin, 2,6-Toluylendiamin, Anilin, Diphenylmethan-2,2'-diamin, Diphenylmethan-2,4'-diamin, Diphenylmethan-4,4'-diamin, 1-Amino-methyl-3-amino-1,5,5-trimethylcyclohexan (Isophorondiamin), Dicyclohexylmethan-4,4'-diamin, Xylylendiamin und Polyoxyalkylenamine.

Auch Polyetherpolyole mit darin dispergierten organischen Füllstoffen, wie beispielsweise Additionsprodukten von Toluylendiisocyanat mit Hydrazinhydrat oder Copolymerisaten von Styrol und Acrylnitril, können eingesetzt werden.

Einsetzbar sind auch die durch Polymerisation von Tetrahydrofuran erhältlichen Polytetramethylenetherglykole mit Molekuargewichten von 400 g/mol bis 4000 g/mol, aber auch Hydroxylgruppen enthaltende Polybutadiene.

Anteilig können in Komponente A neben den Polyhydroxyverbindungen auch Polyetheramine eingesetzt werden. Bezüglich der bevorzugten Molekulargewichte und Zusammensetzung der Mischung gelten die gleichen Grenzen, wie bereits für die Polyetherpolyole aufgezählt.

Die vorstehend erwähnten isocyanatreaktiven Verbindungen können mit allen Polyisocyanaten, aromatischen als auch aliphatischen vor der eigentlichen Prepolymerisierung zu Urethan modifizierten Hydroxylverbindungen umgesetzt werden.

Als Komponente B kommen aromatische, aliphatische und cycloaliphatische Diisocyanate sowie Gemische davon in Betracht. Geeignete Diisocyanate sind Verbindungen der Formel PIC(NCO)₂ mit einem mittleren Molekulargewicht unter 400 g/mol, worin PIC einen aromatischen C₆-C₁₅-Kohlenwasserstoffrest, einen aliphatischen C₄-C₁₂-Kohlenwasserstoffrest oder einen cycloaliphatischen C₆-C₁₅-Kohlenwasserstoffrest bedeuten, beispielsweise Diisocyanate aus der Reihe Butandiisocyanat, Pentandiisocyanat, Hexandiisocyanat (Hexamethylendiisocyanat, HDI), 4-Isocyanatomethyl-1,8-octandiisocyanat (Triisocyanatononan, TIN) 4,4'-Methylenbis(cyclohexylisocyanat), 3,5,5-Trimethyl-1-isocyanato-3-isocyanatomethylcyclohexan (Isophorondiisocyanat, IPDI), 2,4- und/oder 2,6-Methylcyclohexyldiisocyanat (H₆TDI) sowie ω,ω'-Diisocyanato-1,3-dimethylcyclohexan (H₆XDI), Xylylendiisocyanat (XDI), 4,4'-Diisocyanatodicyclohexylmethan, Tetramethylendiisocyanat, 2-Methyl-pentamethylendiisocyanat, 2,2,4-Trimethylhexamethylendiisocyanat (THDI), Dodecamethylendiisocyanat, 1,4-Diisocyanatocyclohexan, 4,4'-Diisocyanato-3,3'-dimethyl-dicyclohexylmethan, 4,4'-Diisocyanatodicyclohexylpropan-(2,2), 3-Isocyanatomethyl-1-methyl-1-isocyanatocyclohexan (MCI), 1,3-Diisooctylcyanato-4-methyl-cyclohexan, 1,3-Diisocyanato-2-methyl-cyclohexan und α,α,α',α'-Tetramethyl-m- oder -p-xylylen-diisocyanat (TMXD1), 2,4-/2,6-Toluoldiisocyanat (TDI), Methylendiphenyldiisocyanat (MDI), Naphtyldiisocyanat (NDI). Bevorzugt werden hier IPDI, HDI oder TDI bzw. MDI-Derivate verwendet.

Die vorstehend erwähnten organischen aliphatischen, cycloaliphatischen oder heterocyclischen Polyisocyanate können auch ganz oder teilweise in Form ihrer Derivate, wie beispielsweise Urethane, Biurete, Allophanate, Uretdione, Isocyanurate und Trimerisate und Mischformen dieser Derivatisierungen.

Grundsätzlich können auch Mischungen von mehreren Polyisocyanaten eingesetzt werden, bevorzugt ist jedoch die Verwendung nur eines Polyisocyanats.

Isocyanatfunktionelle Alkoxysilanverbindung der allgemeinen Formel (II) (Komponente C) sind grundsätzlich alle alkoxysilangruppenhaltigen Monoisocyanate mit einem Molekulargewicht von 140 g/mol bis 500 g/mol geeignet. Beispiele für solche Verbindungen sind Isocyanatomethyltrimethoxysilan, Isocyanatomethyltriethoxysilan, (Isocyanatomethyl)methyldimethoxysilan, (Isocyanatomethyl)-methyldiethoxysilan, 3-Isocyanatopropyltrimethoxysilan, 3-Isocyanatopropylmethyl-dimethoxysilan, 3-Isocyanatopropyltriethoxysilan und 3-Isocyanatopropylmethyldiethoxysilan. Bevorzugt ist hier die Verwendung von 3-Isocyanatopropyltrimethoxysilan.

Es ist erfindungsgemäß auch möglich, isocyanatfunktionelle Silane zu verwenden, die durch Umsetzung eines Diisocyanates mit einem Amino- oder Thiosilan hergestellt wurden, wie sie in der US-A 4,146,585 oder der EP-A 1 136 495 beschrieben werden.

Ferner ist ein Verfahren zur Herstellung von mit Alkoxysilangruppen modifizierten Polymeren gemäß vorstehender Beschreibung Gegenstand der Erfindung, bei dem eine Mischung isocyanatreaktiver Verbindungen (Komponente A) zunächst mit einem Polyisocyanat (Komponente B) zu einem Prepolymer mit isocyanatreaktivem Wasserstoff umgesetzt wird, welches anschließend durch Umsetzung mit einem isocyanatfunktionellem Alkoxysilan (Komponente C) verkappt wird.

Für die Synthese eines Prepolymers mit isocyanatreaktivem Wasserstoff wird ein Überschuss an Komponente A verwendet und zwar vorzugsweise ein NCO : Y¹-H-Verhältnis von 1,0 : 1,3 bis 1,0 : 3,0, besonders bevorzugt von 1,0 : 1,5 bis 1,0 : 2,0 gewählt.

Diese Urethanisierung kann durch Katalyse beschleunigt werden. Zur Beschleunigung der NCO-OH-Reaktion kommen dem Fachmann an sich bekannte Urethanisierungskatalysatoren wie Organozinnverbindungen oder aminische Katalysatoren in Frage. Als Organozinnverbindungen seien beispielhaft genannt: Dibutylzinndiacetat, Dibutylzinndilaurat, Dioctylzinndilaurat, Dibutylzinn-bis-acetoacetonat und Zinncarboxylate wie beispielsweise Zinnoctoat. Die genannten Zinnkatalysatoren können gegebenenfalls in Kombination mit aminischen Katalysatoren wie Aminosilanen oder 1,4-Diazabicyclo[2.2.2]octan verwendet werden.

Besonders bevorzugt wird Dibutylzinndilaurat als Urethanisierungskatalysator eingesetzt.

Im erfindungsgemäßen Verfahren wird diese Katalysatorkomponente, sofern mitverwendet, in Mengen von 0,001 Gew.-% bis 5,0 Gew.-%, bevorzugt 0,001 Gew.-% bis 0,1 Gew.-% und besonders bevorzugt 0,005 Gew.-% bis 0,05 Gew.-% bezogen auf den Festgehalt des Verfahrensprodukts eingesetzt.

Die Urethanisierung der Komponenten A und B wird bei Temperaturen von 20 °C bis 200 °C, bevorzugt 40 °C bis 140 °C und besonders bevorzugt von 60 °C bis 120 °C durchgeführt.

Die Reaktion wird fortgeführt, bis ein vollständiger Umsatz der isocyanatreaktiven Gruppen erreicht ist. Der Verlauf der Reaktion wird sinnvollerweise durch die Überprüfung des NCO-Gehaltes überwacht und ist beendet, wenn der entsprechende theoretische NCO-Gehalt erreicht und konstant ist. Dies kann durch geeignete im Reaktionsgefäß installierte Messgeräte und/oder anhand von Analysen an entnommenen Proben verfolgt werden. Geeignete Verfahren sind dem Fachmann bekannt. Es handelt sich beispielsweise um Viskositätsmessungen, Messungen des NCO-Gehaltes, des Brechungsindex, des OH-Gehalts, Gaschromatographie (GC), kernmagnetische Resonanzspektroskopie (NMR), Infrarotspektroskopie (IR) und nahe Nahinfrarotspektroskopie (NIR). Vorzugsweise wird der NCO-Gehalt der Mischung titrimetrisch bestimmt.

Es ist unerheblich, ob das erfindungsgemäße Verfahrens kontinuierlich z.B. in einem StatikMischer, Extruder oder Kneter oder diskontinuierlich z.B. in einem Rührreaktor durchgeführt wird.

Bevorzugt wird das erfindungsgemäße Verfahren in einem Rührreaktor durchgeführt.

Die weitere Umsetzung der Prepolymere mit isocyanatreaktivem Wasserstoff mit isocyanatfunktionellen Alkoxysilanen (Komponente C) erfolgt wie in EP-B 1 924 621 beschrieben innerhalb eines Temperaturbereiches von 20 °C bis 200 °C, vorzugsweise von 40 °C bis 120 °C und besonders bevorzugt von 60 °C bis 100 °C, wobei die Mengenverhältnisse in der Regel so gewählt werden, dass ein Überschuss NCO-Gruppen eingesetzt wird, der am Ende mit gegenüber Isocyanaten reaktiven Verbindungen oder durch Allophanatisierung abgefangen wird.

Ein weiterer Gegenstand der Erfindung sind Klebstoffe, Beschichtungen oder Schäume basierend auf den erfindungsgemäßen Polyurethanprepolymeren. Diese Klebstoffe, Beschichtungen oder Schäume vernetzen unter Einwirkung von Luftfeuchtigkeit über eine Silanolpolykondensation. Bevorzugt ist der Einsatz der erfindungsgemäßen Prepolymeren in Klebstoffen, besonders bevorzugt in Klebstoffen, die nach DIN EN 14293 eine Zugscherfestigkeit von mindestens 5 N/mm² aufweisen.

Zur Herstellung solcher Klebstoffe, Beschichtungen und Schäume können die erfindungsgemäßen Alkoxysilan-Endgruppen aufweisenden Polyurethanprepolymere zusammen mit üblichen Weichmachern, Füllstoffen, Pigmenten, Trockenmitteln, Additiven, Lichtschutzmitteln, Antioxidantien, Thixotropiermitteln, Katalysatoren, Haftvermittlern und gegebenenfalls weiteren Hilfs- und Zusatzstoffen nach bekannten Verfahren formuliert werden.

Typische erfindungsgemäße Klebstoff- und Beschichtungszubereitungen enthalten beispielsweise 10 Gew.-% bis 100 Gew.-% eines mit Alkoxysilangruppen modifizierten Polymers nach einem der Ansprüche 1 bis 4 oder eines Gemisches aus zwei oder mehreren solcher mit Alkoxysilangruppen modifizierten Polymere, bis zu 30 Gew.-% eines Weichmachers oder eines Gemisches aus zwei oder mehreren Weichmachern, bis zu 30 Gew.-% eines Lösemittels oder eines Gemisches aus zwei oder mehreren Lösemitteln, bis zu 5 Gew.-% eines Feuchtigkeits-Stabilisators oder eines Gemisches aus zwei oder mehreren Feuchtigkeits-Stabilisatoren, bis zu 5 Gew.-% eines UV-Stabilisators oder eines Gemisches aus zwei oder mehreren UV-Stabilisatoren, bis zu 5 Gew.-% eines Katalysators oder eines Gemisches aus zwei oder mehreren Katalysatoren und bis 80 Gew.-% eines Füllstoffs oder eines Gemisches aus zwei oder mehreren Füllstoffen.

Als geeignete Füllstoffe seien beispielhaft Ruß, Fällungskieselsäuren, pyrogene Kieselsäuren, mineralische Kreiden und Fällungskreiden genannt. Als geeignete Weichmacher seien beispielhaft Phthalsäureester, Adipinsäureester, Alkylsulfonsäureester des Phenols, Phosphorsäureester oder auch höhermolekulare Polypropylenglykole genannt.

Als Thixotropiermittel seien beispielhaft pyrogene Kieselsäuren, Polyamide, hydrierte Rizinusöl-Folgeprodukte oder auch Polyvinylchlorid genannt.

Als geeignete Katalysatoren zur Aushärtung können alle metallorganischen Verbindungen und aminischen Katalysatoren eingesetzt werden, die bekanntermaßen die Silanpolykondensation fördern. Besonders geeignete metallorganische Verbindungen sind insbesondere Verbindungen des Zinns und des Titans. Bevorzugte Zinnverbindungen sind beispielsweise: Dibutylzinndiacetat, Dibutylzinndilaurat, Dioctylzinnmaleat und Zinncarboxylate wie beispielsweise Zinn(II)octoat oder Dibutylzinn-bis-acetoacetonat. Die genannten Zinnkatalysatoren können gegebenenfalls in Kombination mit aminischen Katalysatoren wie Aminosilanen oder 1,4-Diazabicyclo[2.2.2]octan verwendet werden. Bevorzugte Titanverbindungen sind beispielsweise A1-kyltitanate, wie Diisobutyl-bisacetessigsäureethylester-titanat. Für die alleinige Verwendung von aminischen Katalysatoren sind insbesondere solche geeignet, die eine besonders hohe Basenstärke aufweisen, wie Amine mit Amidin-Struktur. Bevorzugte aminische Katalysatoren sind daher beispielsweise 1,8-Diazabicyclo[5.4.0]undec-7-en oder 1,5-Diazabicyclo[4.3.0]non-5-en.

Als Trockenmittel seien insbesondere Alkoxysilylverbindungen genannt wie Vinyltrimethoxysilan, Methyltrimethoxysilan, i-Butyltrimethoxysilan, Hexadecyltrimethoxysilan.

Als Haftvermittler werden die bekannten funktionellen Silane eingesetzt wie beispielsweise Aminosilane der vorstehend genannten Art aber auch N-Aminoethyl-3-aminopropyl-trimethoxy und/oder N-Aminoethyl-3-aminopropyl-methyl-dimethoxysilan, Epoxysilane und/oder Mercaptosilane.

### Beispiele:

Die nachfolgenden Beispiele veranschaulichen die vorliegende Erfindung, ohne sie zu beschränken.

Alle Prozentangaben beziehen sich sofern nicht abweichend angegeben auf Gewichtsprozent.

Die Bestimmung der NCO-Gehalte in % wurde über Rücktitration mit 0,1 mol/l Salzsäure nach Reaktion mit Butylamin vorgenommen, Grundlage DIN EN ISO 11909.

Die Viskositätsmessungen wurden nach ISO/DIS 3219:1990 bei einer konstanten Temperatur von 23 °C und einer konstanten Scherrate von 250/sec mit einem Platte-Kegel Rotationsviskosimeter des Typs Physica MCR (Fa. Anton Paar Germany GmbH, Ostfildern, DE) unter Verwendung des Messkegels CP 25-1 ( 25mm Durchmesser, 1° Kegelwinkel) durchgeführt.

Die zur Zeit der Versuchsdurchführung herrschende Umgebungstemperatur von 23 °C wird als RT bezeichnet.

### Beispiel 1 (erfindungsgemäß):

In einem 5L-Sulfierbecher mit Deckel, Rührer, Thermometer und Stickstoffdurchfluss wurde eine Mischung von 1428,3 g Polypropylenglykol mit einer Hydroxylzahl von 28 mg KOH/g und 198,4 g Tripolypropylenglykol mit einer Hydroxylzahl von 585 mg KOH/g auf 120 °C erwärmt. Anschließend wurden 141,4 g Hexamethylendiisocyanat (Desmodur^{®} H, Bayer MaterialScience AG) zugegeben und es wurde prepolymerisiert, bis titrimetrisch kein NCO-Gehalt mehr nachzuweisen war. Anschließend wurden bei 120°C 231,9 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polyurethanprepolymer hatte eine Viskosität von 98100 mPas (23 °C) und ein zahlenmittleres Molekulargewicht von 3500 g/mol.

### Vergleichsbeispiel 1:

In einem 1 L-Sulfierbecher mit Deckel, Rührer, Thermometer und Stickstoffdurchfluss wurde eine Mischung von 1758,8 g Polypropylenglykol mit einer Hydroxylzahl von 56 mg KOH/g auf 120 °C erwärmt. Anschließend wurden 87,0 g Hexamethylendiisocyanat (Desmodur^{®} H, Bayer MaterialScience AG) zugegeben und es wurde prepolymerisiert, bis titrimetrisch kein NCO-Gehalt mehr nachzuweisen war. Anschließend wurden bei 120°C 154,2 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polyurethanprepolymer hatte eine Viskosität von 56500 mPas (23 °C) und ein zahlenmittleres Molekulargewicht von 3100 g/mol.

### Bestimmung der Hautbildezeit

Mittels eines Rakels (200 µm) wird ein Film auf eine vorher mit Ethylacetat gereinigte Glasplatte aufgetragen und sofort in den Drying Recorder eingelegt. Die Nadel wird mit 10 g belastet und bewegt sich über eine Zeitraum von 24 Stunden über eine Strecke von 35 cm.

Der Drying Recorder befindet sich in einem Klimaraum bei 23 °C und 50 % rel. Luftfeuchte.

Als Hautbildezeit wird der Zeitpunkt des Verschwindens der permanenten Spur der Nadel aus dem Film angegeben.

### Anwendungstechnische Beispiele

Zur Beurteilung der anwendungstechnischen Eigenschaften der verschiedenen Polymere wurden diese in folgender Formulierung verarbeitet:

| | **Einsatzmenge in Gew.%** |
|---|---|
| Polymer | 46,06 |
| Füllstoff(Socal^{®} U₁S₂) | 49,75 |
| Trocknungsmittel (Dynasylan^{®} VTMO) | 2,76 |
| Haftvermittler (Dynasylan^{®} 1146) | 1,38 |
| Katalysator (Lupragen^{®} N700) | 0,05 |

Zur Herstellung der Formulierung wird als Bindemittel das Polymer mit dem Füllstoff (Socal^{®} U1S2; Fa. Solvay GmbH) und dem Trocknungsmittel (Dynasylan^{®} VTMO; Fa. Evonik AG, Deutschland) versetzt und in einem Vakuumdissolver mit Wandabstreifer bei 3000U/min vermischt. Anschließend wird der Haftvermittler (Dynasylan^{®} 1146; Fa. Evonik AG) hinzugefügt und innerhalb von 5 min bei 1000 U/min untergerührt. Zuletzt wird der Katalysator (Lupragen^{®} N700; Fa. BASF SE, Deutschland) bei 1000 U/min eingerührt und abschließend die fertige Mischung im Vakuum entlüftet.

Zur Messung der physikalischen Eigenschaften werden sowohl Membranen von 2 mm Dicke, als auch Proben zur Bestimmung der Zugscherfestigkeit hergestellt. Zur Messung der Zugscherfestigkeit werden Probenkörper aus Eiche verwendet, die für 7 Tage bei 23 °C/50 % rel. Luftfeuchte, anschließend 20 Tage bei 40 °C und danach einen Tag bei 23 °C/50 % rel. Luftfeuchte gelagert werden.

Die Härte der Filme wird gemäß DIN 53505 gemessen und die Zugscherfestigkeit gemäß DIN EN 14293.

Die folgende Tabelle zeigt die erhaltenen Ergebnisse:

| | **Vgl. 1** | **Bsp. 1** |
|---|---|---|
| Shore D Härte | 26 | 37 |
| Zugscherfestigkeit [N/mm²] | 3,1 | 7,3 |
| Hautbildezeit [min] | 60 | 50 |

## Patentansprüche

1. Mit Alkoxysilangruppen modifizierte, isocyanatgruppenfreie, bei Raumtemperatur (23 °C) flüssige Polymere mit einem zahlenmittleren Molekulargewicht von kleiner 5000 g/mol, die durch Umsetzung
a) eines isocyanatreaktiven Wasserstoff enthaltenden Prepolymers, welches Struktureinheiten der allgemeinen Formel (I) enthält, 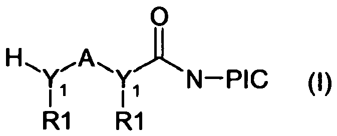 worin
PIC für einen um die Isocyanatgruppen reduzierten Rest eines Polyisocyanates (B) steht,
Y¹ für Stickstoff, Sauerstoff oder Schwefel steht,
R¹ entweder für ein freies Elektronenpaar oder Wasserstoff oder für einen beliebigen organischen Rest steht,
A ein um die isocyanatreaktiven Gruppen reduzierter Rest eines Isocyanat-reaktiven Polymers und niedermolekularer, multifunktioneller isocyanatreaktiven Verbindungen, das aus in beliebiger Reihenfolge, also blockweise, alternierend oder statistisch, über das aus den Polyisocyanaten B stammende Strukturelement der Formel
-Y²-(C=O)-NH-PIC-NH-(C=O)-Y¹(R¹)-
worin Y¹ und Y² unabhängig voneinander für Stickstoff, Sauerstoff oder Schwefel stehen,
miteinander verknüpften niedermolekularen, multifunktionellen isocyanatreaktiven Verbindungen (A1) und Polyetherpolyolen (A2) aufgebaut ist, wobei es sich bei den terminalen Gruppen dieser Substrukturen, ganz oder teilweise, auch um die entsprechenden Thioverbindungen oder Aminderivate handeln kann, wobei es sich zu 1 bis 40 Gew.-% um Substrukturen A1 eines mittleren Molekulargewichts (Mn) kleiner 500 g/mol und
zu 60 bis 99 Gew.-% um Substrukturen A2 eines mittleren Molekulargewichts (Mn) von mehr als 500 g/mol handelt,
und wobei A insgesamt eine mittlere Funktionalität von 2 bis 6 aufweist,
mit
b) einer isocyanatfunktionellen Alkoxysilanverbindung (Komponente C) der allgemeinen Formel (II): 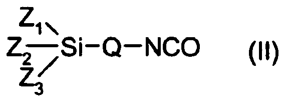 worin
Z¹, Z² und Z³ gleiche oder verschiedene C₁-C₈-Alkoxy- oder C₁-C₈-Alkylreste sind, die auch verbrückt sein können, wobei aber an jedem Si-Atom mindestens ein C₁-C₈-Alkoxyrest vorhanden sein muss,
Q ein difunktioneller linearer oder verzweigter organischer Rest ist, bevorzugt ein Alkylenradikal mit 1 bis 8 Kohlenstoffatomen
erhältlich sind.

2. Verbindungen gemäß Ansprüchen 1, **dadurch gekennzeichnet, dass** es sich bei den Polyetherpolyolen (A2) um Polytetrahydrofuranpolyole handelt.

3. Verbindungen gemäß Anspruch 1 mit einem zahlenmittleren Molekulargewicht von kleiner 4000 g/mol.

4. Verbindungen gemäß Anspruch 1 mit einer Viskosität kleiner 700 Pas bei 23 °C, bevorzugt kleiner 500 Pas bei 23 °C.

5. Verfahren zur Herstellung von mit Alkoxysilangruppen modifizierten Polymeren gemäß Ansprüchen 1 bis 4, **dadurch gekennzeichnet, dass** zunächst eine Mischung isocyanatreaktiver Verbindungen A (gemäß Definition A mit vorhandenen isocyanatreaktiven Gruppen) mit einem Unterschuss Polyisocyanat (Komponente B) zu einem Prepolymer mit isocyanatreaktivem Wasserstoff umgesetzt wird, welches anschließend durch Umsetzung mit einer isocyanatfunktionellen Alkoxysilanverbindung (Komponente C) verkappt wird.

6. Verfahren gemäß Anspruch 5, **dadurch gekennzeichnet, dass** zur Synthese des Prepolymers mit isocyanatreaktivem Wasserstoff ein Unterschuss an Polyisocyanat in einem Verhältnis NCO zu Y¹-H von 1,0 zu 1,3 bis 1,0 zu 3,0 eingesetzt wird.

7. Verfahren gemäß Anspruch 5, **dadurch gekennzeichnet, dass** zur Synthese des Prepolymers mit isocyanatreaktivem Wasserstoff ein Unterschuss an Polyisocyanat in einem Verhältnis NCO zu Y¹-H von 1,0 zu 1,5 bis 1,0 zu 2,0 eingesetzt wird.

8. Verfahren gemäß Anspruch 5, **dadurch gekennzeichnet, dass** die Umsetzung des Prepolymers mit isocyanatreaktivem Wasserstoff mit einer isocyanatfunktionellen Alkoxysilanverbindung mit einem Verhältnis NCO zu Y¹-H von 0,8 zu 1,0 bis 1,5 zu 1,0 durchgeführt wird.

9. Verwendung der mit Alkoxysilangruppen modifizierten Polymere gemäß Ansprüchen 1 bis 4 in Klebstoffen, Beschichtungen und Schäumen.

10. Klebstoff- und Beschichtungszubereitungen enthaltend
10 Gew.-% bis 100 Gew.-% eines mit Alkoxysilangruppen modifizierten Polymers nach einem der Ansprüche 1 bis 4 oder eines Gemisches aus zwei oder mehreren solcher mit Alkoxysilangruppen modifizierten Polymere,
0 Gew.-% bis 30 Gew.-% eines Weichmachers oder eines Gemisches aus zwei oder mehreren Weichmachern
0 Gew.-% bis 30 Gew.-% eines Lösemittels oder eines Gemisches aus zwei oder mehreren Lösemitteln
0 Gew.-% bis 5 Gew.-% eines Feuchtigkeits-Stabilisators oder eines Gemisches aus zwei oder mehreren Feuchtigkeits-Stabilisatoren
0 Gew.-% bis 5 Gew.-% eines UV-Stabilisators oder eines Gemisches aus zwei oder mehreren UV-Stabilisatoren
0 Gew.-% bis 5 Gew.-% eines Katalysators oder eines Gemisches aus zwei oder mehreren Katalysatoren
0 Gew.-% bis 80 Gew.-% eines Füllstoffs oder eines Gemisches aus zwei oder mehreren Füllstoffen,
wobei sich die Anteile der Komponenten zu 100 Gew.-% summieren.

## Claims

1. Polymers modified with alkoxysilane groups, free of isocyanate groups, liquid at room temperature (23°C), having a number-average molecular weight of less than 5000 g/mol, and obtainable by reacting
a) a prepolymer which comprises isocyanate-reactive hydrogen and structural units of the general formula (I), 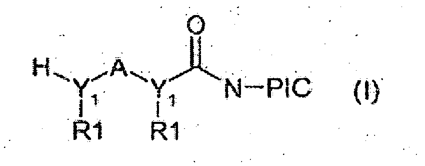 in which
PIC is a radical of a polyisocyanate (B) reduced by its isocyanate groups,
Y¹ is nitrogen, oxygen or sulphur,
R¹ either is a free electron pair or hydrogen, or is any desired organic radical,
A is a radical, reduced by its isocyanate-reactive groups, of an isocyanate-reactive polymer and of low molecular weight, polyfunctional, isocyanate-reactive compounds that is constructed from polyether polyols (A2) and low
molecular weight, polyfunctional, isocyanate-reactive compounds (A1) linked with one another in any order, i.e. blockwise, alternatingly or randomly, via the structural element originating from the polyisocyanates B and having the formula
**-Y²-(C=O)-NH-PIC-NH-(C=O)-Y¹(R¹)-**
in which Y¹ and Y² independently of one another are nitrogen, oxygen or sulphur,
it also being possible for the terminal groups of these substructures, wholly or partly, to comprise the corresponding thio compounds or amine derivatives, where
1 to 40 wt% are substructures A1 with an average molecular weight (Mn) of less than 500 g/mol and
60 to 99 wt% of substructures A2 with an average molecular weight (Mn) of more than 500 g/mol,
and where A overall has an average functionality of 2 to 6,
with
b) an isocyanate-functional alkoxysilane compound (component C) of the general formula (II): 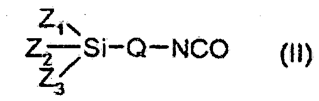 in which
Z¹, Z² and Z³ are identical or different C₁-C₈-alkoxy or C₁-C₈-alkyl radicals, which may also be bridged, but where there must be at least one C₁-C₈-alkoxy radical on each Si atom,
Q and is a difunctional, linear or branched, organic radical, preferably an alkylene radical having 1 to 8 carbon atoms.

2. Compounds according to Claim 1, **characterized in that** polyether polyols (A2) are polytetrahydrofuran polyols.

3. Compounds according to Claim 1 with a number-average molecular weight of less than 4000 g/mol.

4. Compounds according to Claim 1 with a viscosity of less than 700 Pas at 23°C, preferably of less than 500 Pas at 23°C.

5. Process for preparing polymers modified with alkoxysilane groups according to Claims 1 to 4, **characterized in that** first of all a mixture of isocyanate-reactive compounds A (as per definition of A with isocyanate-reactive groups present) is reacted with a deficit amount of polyisocyanate (component B) to give a prepolymer containing isocyanate-reactive hydrogen, which is subsequently masked by reaction with an isocyanate-functional alkoxysilane compound (component C).

6. Process according to Claim 5, **characterized in that** the prepolymer containing isocyanate-reactive hydrogen is synthesized using a deficit amount of polyisocyanate in an NCO to Y¹-H ratio of 1.0:1.3 to 1.0:3.0.

7. Process according to Claim 5, **characterized in that** the prepolymer containing isocyanate-reactive hydrogen is synthesized using a deficit amount of polyisocyanate in an NCO to Y¹-H ratio of 1.0:1.5 to 1.0:2.0.

8. Process according to Claim 5, **characterized in that** the reaction of the prepolymer containing isocyanate-reactive hydrogen with an isocyanate-functional alkoxysilane compound is carried out with a ratio of NCO to Y¹-H of 0.8:1.0 to 1.5:1.0.

9. Use of the polymers modified with alkoxysilane groups according to Claims 1 to 4 in adhesives, coatings and foams.

10. Adhesive and coating preparations comprising
10 wt% to 100 wt% of a polymer modified with alkoxysilane groups according to any of Claims 1 to 4 or of a mixture of two or more such polymers modified with alkoxysilane groups,
0 wt% to 30 wt% of a plasticizer or of a mixture of two or more plasticizers,
0 wt% to 30 wt% of a solvent or of a mixture of two or more solvents,
0 wt% to 5 wt% of a moisture stabilizer or of a mixture of two more moisture stabilizers,
0 wt% to 5 wt% of a UV stabilizer or of a mixture of two or more UV stabilizers,
0 wt% to 5 wt% of a catalyst or of a mixture of two or more catalysts,
0 wt% to 80 wt% of a filler or of a mixture of two or more fillers,
the fractions of the components adding up to 100 wt%.

## Revendications

1. Polymères liquides à la température ambiante (23 °C), exempts de groupes isocyanate, modifiés avec des groupes alcoxysilane, ayant une masse moléculaire moyenne en nombre inférieure à 5 000 g/mole, qui peuvent être obtenus par mise en réaction
a) d'un prépolymère contenant des atomes d'hydrogène réactifs vis-à-vis d'isocyanates, qui contient des motifs structuraux de formule générale (I), 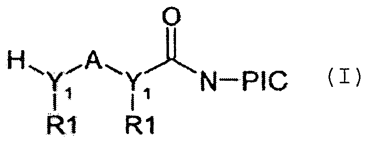 dans laquelle
PIC représente un radical réduit des groupes isocyanate d'un polyisocyanate (B),
Y¹ représente un atome d'azote, d'oxygène ou de soufre,
R¹ représente soit une paire d'électrons libres, soit un atome d'hydrogène ou un radical organique quelconque,
A représente un radical, réduit des groupes réactifs vis-à-vis d'isocyanates, d'un polymère réactif vis-à-vis d'isocyanates et de composés de faible masse moléculaire, multifonctionnels, réactifs vis-à-vis d'isocyanates, qui est constitué, en un ordre
quelconque, à savoir en un ordre séquentiel, alterné ou statistique, de composés (A1) de faible masse moléculaire, multifonctionnels, réactifs vis-à-vis d'isocyanates, et de polyétherpolyols (A2), reliés entre eux par l'élément structural provenant des polyisocyanates B, de formule
-Y²-(C=O)-NH-PIC-NH-(C=O)-Y¹(R¹)-
dans laquelle Y¹ et Y² représentent indépendamment l'un de l'autre un atome d'azote, d'oxygène ou de soufre,
les groupes terminaux de ces sous-structures pouvant également consister, en totalité ou en partie, en les composés thio ou dérivés d'amines correspondants, ces sous-structures consistant
à raison de 1 à 40 % en poids en sous-structures A1 ayant une masse moléculaire moyenne (Mn) inférieure à 500 g/mole et
à raison de 60 à 99 % en poids en sous-structures A2 ayant une masse moléculaire moyenne (Mn) de plus de 500 g/mole,
et A présentant au total une fonctionnalité moyenne de 2 à 6,
avec
b) un composé alcoxysilane à fonction isocyanate (composant C) de formule générale (II) : 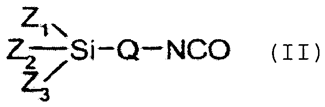 dans laquelle
Z¹, Z² et Z³ sont des radicaux alkyle en C₁-C₈ ou alcoxy en C₁-C₈ identiques ou différents, qui peuvent également être pontés, mais au moins un radical alcoxy en C₁-C₈ devant être présent sur chaque atome de silicium,
Q est un radical organique difonctionnel linéaire ou ramifié, de préférence un radical alkylène ayant de 1 à 8 atomes de carbone.

2. Composés selon la revendication 1, **caractérisés en ce que** les polyétherpolyols (A2) consistent en des polytétrahydrofuranepolyols.

3. Composés selon la revendication 1, ayant une masse moléculaire moyenne en nombre inférieure à 4 000 g/mole.

4. Composés selon la revendication 1, ayant une viscosité inférieure à 700 Pa.s à 23 °C, de préférence inférieure à 500 Pa.s à 23 °C.

5. Procédé pour la préparation de polymères modifiés avec des groupes alcoxysilane selon les revendications 1 à 4, **caractérisé en ce que** d'abord on fait réagir un mélange de composés A réactifs vis-à-vis d'isocyanates (A selon la définition, à groupes réactifs vis-à-vis d'isocyanates présents) avec une quantité insuffisante de polyisocyanate (composant B), pour obtenir un prépolymère à atomes d'hydrogène réactifs vis-à-vis d'isocyanates, qui est ensuite coiffé par réaction avec un composé alcoxysilane à fonction isocyanate (composant C).

6. Procédé selon la revendication 5, **caractérisé en ce que** pour la synthèse du prépolymère à atomes d'hydrogène réactifs vis-à-vis d'isocyanates on utilise une quantité insuffisante de polyisocyanate en un rapport NCO à Y¹-H de 1,0 : 1,3 à 1,0 : 3,0.

7. Procédé selon la revendication 5, **caractérisé en ce que** pour la synthèse du prépolymère à atomes d'hydrogène réactifs vis-à-vis d'isocyanates on utilise une quantité insuffisante de polyisocyanate en un rapport NCO à Y¹-H de 1,0 : 1,5 à 1,0 : 2,0.

8. Procédé selon la revendication 5, **caractérisé en ce qu'**on effectue la réaction du prépolymère à atomes d'hydrogène réactifs vis-à-vis d'isocyanates avec un composé alcoxysilane à fonction isocyanate avec un rapport NCO à Y¹-H de 0,8 : 1,0 à 1,5 : 1,0.

9. Utilisation des polymères modifiés avec des groupes alcoxysilane selon les revendications 1 à 4 dans des adhésifs, revêtements et mousses.

10. Compositions d'adhésifs et de revêtement, contenant
10 % en poids à 100 % en poids d'un polymère modifié avec des groupes alcoxysilane, selon l'une quelconque des revendications 1 à 4, ou d'un mélange de deux ou plus de deux de tels polymères modifiés avec des groupes alcoxysilane,
0 % en poids à 30 % en poids d'un plastifiant ou d'un mélange de deux ou plus de deux plastifiants
0 % en poids à 30 % en poids d'un solvant ou d'un mélange de deux ou plus de deux solvants
0 % en poids à 5 % en poids d'un stabilisant vis-à-vis de l'humidité ou d'un mélange de deux ou plus de deux stabilisants vis-à-vis de l'humidité
0 % en poids à 5 % en poids d'un stabilisant UV ou d'un mélange de deux ou plus de deux stabilisants UV
0 % en poids à 5 % en poids d'un catalyseur ou d'un mélange de deux ou plus de deux catalyseurs
0 % en poids à 80 % en poids d'une charge ou d'un mélange de deux ou plus de deux charges
la somme des proportions des composants étant égale à 100 % en poids.
